## Europäisches Patentamt

## European Patent Office

## Office européen des brevets

(11) Veröffentlichungsnummer: **0 135 739**

**B1**

(12) # EUROPÄISCHE PATENTSCHRIFT

(45) Veröffentlichungstag der Patentschrift:
14.12.88

(51) Int. Cl.⁴: **G 11 B 5/127**

(21) Anmeldenummer: **84109248.9**

(22) Anmeldetag: **03.08.84**

(54) **Kombinierter Schreib- und Lese-Magnetkopf für ein senkrecht zu magnetisierendes Aufzeichnungsmedium.**

(30) Priorität: **19.08.83 DE 3330023**

(43) Veröffentlichungstag der Anmeldung:
**03.04.85 Patentblatt 85/14**

(45) Bekanntmachung des Hinweises auf die Patenterteilung:
**14.12.88 Patentblatt 88/50**

(84) Benannte Vertragsstaaten:
**AT CH DE FR GB IT LI NL SE**

(56) Entgegenhaltungen:
**EP-A-0 053 944**
**GB-A-1 189 713**
**US-A-3 686 468**

**PATENT ABSTRACTS OF JAPAN, Band 8, Nr. 79, 11. April 1984, Seite (P. 267) (1516) & JP-A-58-222413 (SUWA SEIKOSHA) 24-12-1983**
**PATENT ABSTRACTS OF JAPAN, Band 6, Nr. 237, 25. November 1982, Seite (P-157) (1115); & JP-A-57-135418 (FUJITSU), 21-08-1982**
**PATENT ABSTRACTS OF JAPAN, Band 7, Nr. 30, 5. Februar 1983, Seite (P-173) (1175) & JP-A-57-183614 (NIPPON DENSHIN DENWA KOSHA), 12-11-1982**

(73) Patentinhaber: **Siemens Aktiengesellschaft Berlin und München, Wittelsbacherplatz 2, D-8000 München 2 (DE)**

(72) Erfinder: **Schewe, Herbert, Dr., Haydnstrasse 58, D-8522 Herzogenaurach (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf ein Datenspeichersystem
- mit einem Aufzeichnungsmedium, das mit mindestens einer magnetisierbaren Speicherschicht versehen ist, welche ein magnetisch anisotropes Material enthält, dessen Achse leichter Magnetisierung im wesentlichen senkrecht zur Oberfläche des Mediums ausgerichtet ist, und in das längs einer Spur Informationen durch senkrechte Magnetisierung der Speicherschicht einzuschreiben sind,
- mit einem kombinierten Schreib- und Lese-Magnetkopf, der einen den magnetischen Fluß führenden Leitkörper mit zwei Polschenkeln aufweist, die in Bewegungsrichtung des Kopfes hintereinander und mit vorbestimmtem Abstand zueinander angeordet sind und denen jeweils eine Spulenwicklung zugeordnet ist,
      sowie
- mit einer Ansteuerschaltung für die beiden Spulenwicklungen.

Ein entsprechendes Datenspeichersystem geht aus der EP-A-0 053 944 hervor.

Das Prinzip der senkrechten Magnetisierung zur Speicherung von Informationen ist allgemein bekannt (vgl. z. B. "IEEE Transactions on Magnetics", vol. MAG-16, no. 1, Jan. 1980, Seiten 71 bis 76 oder die DE-A-2 924 013). Für dieses Prinzip, das vielfach auch als vertikale Magnetisierung bezeichnet wird, sind besondere Aufzeichnungsmedien wie beispielsweise eine starre Magnetspeicherplatte, eine flexible Einzelplatte (Floppy Disc) oder ein Magnetband erforderlich. Ein solches Aufzeichnungsmedium weist mindestens eine magnetisierbare Speicherschicht vorbestimmter Dicke auf, welche ein magnetisch anisotropes Material, insbesondere aus einer CoCr-Legierung, enthält, dessen Achse leichter Magnetisierung senkrecht zur Oberfläche des Mediums gerichtet ist. Mittels eines besonderen Schreibkopfes werden dann längs einer Spur die einzelnen Informationen in aufeinanderfolgenden Abschnitten, auch Zellen oder Blöcke genannt, durch Magnetisierung der Speicherschicht eingeschrieben. In der Praxis werden im allgemeinen die magnetischen Flußwechsel, d.h. die Übergänge von einer Magnetisierungsrichtung zur entgegengesetzten, als Informationen benutzt. Die Abschnitte haben dabei eine vorbestimmte, auch als Wellenlänge bezeichnete Ausdehnung in Längsrichtung der Spur. Diese Ausdehnung kann im Vergleich zu der bei dem Verfahren der longitudinalen Speicherung durch die Entmagnetisierung gegebenen Grenze wesentlich kleiner sein, so daß sich nach dem Prinzip der senkrechten Magnetisierung die Informationsdichte in dem Aufzeichnungsmedium vorteilhaft vergrößern läßt.

Bei diesem Prinzip der senkrechten Magnetisierung ergeben sich jedoch Probleme bei der Entwicklung entsprechender kombinierter Schreib-/Lese-Köpfe. Bei diesen Köpfen macht nämlich vor allem die angestrebte Flußführung zu einem möglichst geschlossenen Kreis mit geringem magnetischen Widerstand Schwierigkeiten.

Ein geeigneter kombinierter Schreib-/Lese-Kopf, d.h. ein Magnetkopf, mit dem sowohl die Schreib- als auch die Lesefunktion auszuüben ist, weist im allgemeinen einen sogenannten Hauptpol auf, mit dem ein hinreichend starkes senkrechtes Magnetfeld zum Ummagnetisieren der einzelnen Abschnitte in der Speicherschicht erzeugt wird. Der notwendige Rückschluß kann dann z. B. durch einen sogenannten Hilfspol auf der gegenüberliegenden Seite des Aufzeichnungsmediums erfolgen (vgl. die genannte Literaturstelle "IEEE Trans. Magn.", vol. MAG-16). Daneben ist auch der Rückschluß durch den Streufluß bekannt ("IEEE Trans. Magn.", vol. MAG-18, no. 6, Nov. 1982, Seiten 1170 bis 1172). Ferner läßt sich ein Rückschluß auch mit einem besonderen Hilfspol vornehmen, der sich auf derselben Seite wie der Hauptpol befindet (vgl. "IEEE Trans. Magn.", vol. MAG-17, no. 6, Nov. 1981, Seiten 3120 bis 3122 oder vol. MAG-18, no. 6, Nov. 1982, Seiten 1158 bis 1163 oder die genannte DE-A-2 924 013). Der Hilfspol dient dabei in jedem Falle lediglich nur zur Flußrückführung. Ein eventuelles Mitschreiben des Hilfspols kann in Kauf genommen werden, da ihm der schreibende Hauptpol stets nacheilt und somit vom Hilfspol eventuell geschriebene Informationen überschreibt, sofern die Breite des Hilfspols nicht größer als die des Hauptpols ist und somit bereits beschriebene Nachbarspuren unbeeinflußt bleiben. Darüber hinaus sind auch ein größerer Querschnitt des Hilfspols im Vergleich zum Hauptpol und eine verhältnismäßig große Ausdehnung des Luftspaltes erforderlich, um eine weitgehende Reduzierung der magnetischen Flußdichte am Hilfspol zu gewährleisten. Die zwischen dem Haupt und dem Hilfspol liegende Spaltschicht ist jedoch wegen ihrer verhältnismäßig großen Ausdehnung außerordentlich schwierig herzustellen. Auch ein Mitlesen des Hilfspols kann zu Schwierigkeiten bei der Informationserkennung führen.

Aus der eingangs genannten EP-A-0 053 944 ist ferner ein kombinierter Schreib/Lese-Magnetkopf zu entnehmen, der ebenfalls einen den Magnetfluß führenden Leitkörper aufweist Dieser magnetische Leitkörper ist annähernd ringförmig gestaltet, wobei jedoch ein äußerst schmaler Luftspalt ausgebildet ist. Die mit ihren Stirnseiten diesen Spalt begrenzenden Teile des ringförmigen Leitkörpers können als die aufeinander zulaufenden Endstücke zweier in Bewegungsrichtung des Kopfes hintereinander liegender Polschenkel betrachtet werden. Jedem dieser Polschenkel ist dabei eine eigene Spulenwicklung aus diskreten Leitern zugeordnet. Mittels einer Ansteuerschaltung sind dabei die beiden Spulenwicklungen elektrisch parallel oder hintereinander zu schalten. Ein derartiger Magnetkopf läßt sich aber praktisch nicht in Dünnfilm-Technik aufbauen. Er ist deshalb für Hochleistungs-Datenspeicher nicht zu verwenden.

Hingegen ist ein aus der JP-A-57 135 418 zu entnehmender Magnetkopf für derartige Datenspeicher geeignet. Der bekannte Dünnfilm-Kopf enthält einen magnetischen Leitkörper mit zwei Polschenkeln, deren einem Aufzeichnungsmedium zugewandten Endstücke senkrecht zur Oberfläche des Aufzeichnungsmediums ausgerichtet sind und parallel zu dieser Oberfläche liegende, durch einen engen Spalt beabstandete Magnetpole ausbilden. Zwischen den Polschenkeln ist ein gegenüber dem Spalt erweiterter Zwischenraum vorhanden, durch den sich eine nur für die Lesefunktion vorgesehene Spulenwicklung erstreckt. Außerdem ist eine weitere Spulenwicklung allein für die Schreibfunktion vorgesehen. Diese Schreibwicklung ist dabei so angeordnet, daß beide Polschenkel in der gleichen Richtung und mit etwa gleicher Stärke magnetisiert werden. Die longitudinale, d.h. in Bewegungsrichtung weisende Ausdehnung einer in das Aufzeichnungsmedium zu schreibenden Informationseinheit ist deshalb entsprechend groß, d.h. die Speicherdichte ist dementsprechend beschränkt.

Aufgabe der vorliegenden Erfindung ist es, das Datenspeichersystem der eingangs genannten Art dahingehend zu verbessern, daß zum einen ein verhältnismäßig einfacher mechanischer Aufbau des Magnetkopfes ermöglicht wird und zum anderen eine schaltbare Schreib- und Lesefunktion mit jeweils hohem Wirkungsgrad bei hoher Speicherdichte gewährleistet ist.

Diese Aufgabe wird erfindungsgemäß dadurch gelöst, daß

- die Polschenkel dem Aufzeichnungsmedium zugewandte Endstücke aufweisen, die zumindest weitgehend senkrecht zur Oberfläche des Aufzeichnungsmediums ausgerichtet sind und parallel zu dieser Oberfläche verlaufende Polflächen von Magnetpolen ausbilden,

- zwischen den Polschenkeln ein vom Abstand zwischen ihren dem Aufzeichnungsmedium (M) zugewandten Endstücken auf einen größeren Abstand erweiterter Zwischenraum sowie ein Verbindungsbereich, in dem die Polschenkel auf ihrer dem Aufzeichnungsmedium abgewandten Seite aneinander gefügt sind, ausgebildet sind,

- jede Spulenwicklung zwei Teilwicklungen umfaßt, wobei jeweils eine der Teilwicklungen in dem erweiterten Zwischenraum und die anderen Teilwicklungen in dem Verbindungsbereich angeordnet sind,
und

- mittels der Ansteuerschaltung diese Spulenwicklungen derart zu erregen sind, daß die Führungsrichtungen des magnetischen Flusses in den dem Aufzeichnungsmedium zugewandten Endstücken der Polschenkel für die Schreibfunktion antiparallel verlaufen, wobei die bezüglich der Oberfläche des Aufzeichnungsmediums senkrechte Magnetfeldkomponente des aus der Polfläche des einen Polschenkels austretenden magnetischen Flusses vom Betrag her größer ist als die Koerzitivfeldstärke der Speicherschicht des Aufzeichnungsmediums, während die entsprechende Magnetfeldkomponente des magnetischen Flusses des anderen Polschenkels vom Betrag her kleiner als die Koerzitivfeldstärke ist.

Die mit dieser Ausgestaltung des Magnetkopfes verbundenen Vorteile sind insbesondere darin zu sehen, daß sich für die Schreibfunktion ein Magnetfeld mit einer sehr ausgeprägten vertikalen Komponente praktisch nur auf einen einzigen Polschenkel konzentrieren läßt. Der Magnetkopf schreibt also quasi als Einzel-Pol-Kopf die Informationen in das Aufzeichnungsmedium. Der andere Polschenkel nimmt also an der Schreibfunktion nicht teil. Die longitudinale Ausdehnung einer Informationseinheit wird demnach nur durch den einzigen schreibenden Polschenkel festgelegt. Außerdem kann der Abstand zwischen den beiden Polschenkelenden sehr klein gehalten werden, weshalb der Kopf auch gute Lese-Eigenschaften aufweist und die Gefahr von Auswaschungen des zwischen diesen Enden ausgebildeten Spaltes zumindest weitgehend ausgeschlossen ist.

Vorteilhafte Ausgestaltungen des Datenspeichersystems nach der Erfindung gehen aus den abhängigen Ansprüchen hervor.

Zur weiteren Erläuterung der Erfindung wird nachfolgend auf die Zeichnung verwiesen, in denen Magnetköpfe für Datenspeichersysteme schematisch dargestellt sind. Dabei zeigt Figur 1 eine an sich bekannte Magnetisierungsart eines Magnetkopfes. Aus den Figuren 2 und 3 gehen erfindungsgemäße Magnetisierungsverhältnisse während des Schreibens bzw. Lesens für einen Magnetkopf hervor. In Figur 4 ist eine Ausführungsform eines Magnetkopfes eines erfindungsgemäßen Datenspeichersystems veranschaulicht.

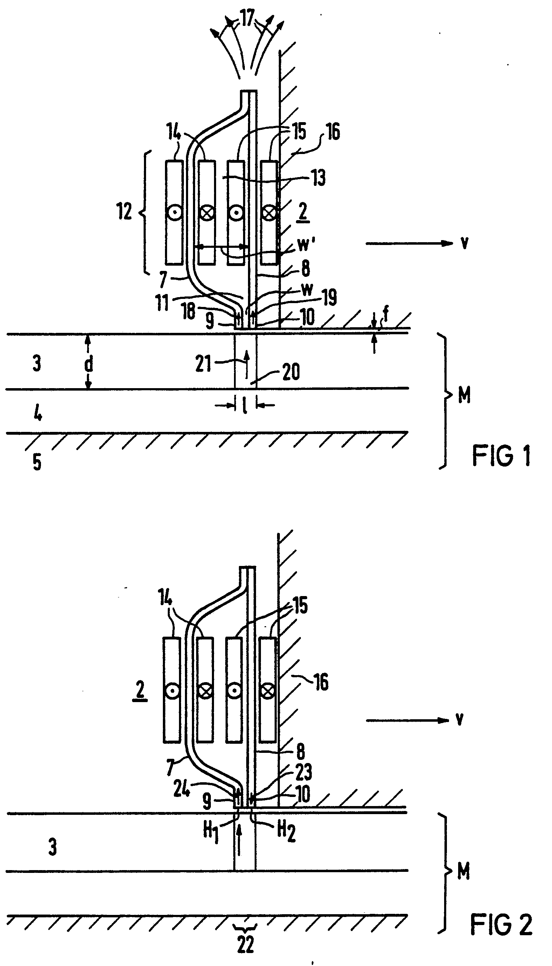

Bei dem in Figur 1 als Längsschnitt gezeigten kombinierten Schreib- und Lese-Magnetkopf wird von einem bekannten Kopf ausgegangen, wie er z. B. aus der genannten DE-A-2 924 013 zu entnehmen ist. Der in der Figur allgemein mit 2 bezeichnete Kopf, der während seiner Schreibfunktion gemäß dem Prinzip der senkrechten (vertikalen) Magnetisierung gezeigt ist, befindet sich z. B. an der Stirnseite oder auf der Rückseite eines gebräuchlichen, als Flugkörper bezeichneten Elementes, das in der Figur nicht näher ausgeführt ist. Er ist relativ zu einem an sich bekannten Aufzeichnungsmedium M in geringer Flughöhe f von beispielsweise 0,2 µm über diesem Medium zu führen. z. B. wird das Aufzeichnungsmedium unter dem Magnetkopf hinweggeführt. Die relative Bewegungsrichtung des Magnetkopfes 2 bezüglich des Aufzeichnungsmediums M ist durch eine mit v bezeichnete gepfeilte Linie angedeutet. Das Aufzeichnungsmedium M, z. B. eine Magnetspeicherplatte, weist eine Speicherschicht 3 insbesondere aus einer CoCr-Legierung auf, welche eine vorbestimmte Dicke d hat. Diese Schicht kann gegebenenfalls auf ihrer dem Magnetkopf 2 abgewandten Seite mit einer weichmagnetischen Schicht 4, z. B. aus einer speziellen NiFe-Legierung, verbunden sein. Die Speicherschicht 3 und gegebenenfalls die Schicht 4 sind auf der oberen Flachseite eines Trägerkörpers 5 des Aufzeichnungsmediums M abgeschieden.

Der Magnetkopf 2 weist zwei Polschenkel 7 und 8 auf, die weitgehend und insbesondere an ihren dem Aufzeichnungsmedium M zugewandten Enden 9 bzw. 10 zumindest annähernd senkrecht zur Oberfläche des Aufzeichnungsmediums M ausgerichtet sind. Zwischen diesen Polschenkelenden ist ein Luftspalt 11 mit einer vorteilhaft geringen longitudinalen, d.h. in Bewegungsrichtung weisenden Weite w von unter 1 $\mu$m, insbesondere unter 0,3 $\mu$m ausgebildet. In einem mittleren Bereich 12 ist der Abstand zwischen den beiden Polschenkeln 7 und 8 gegenüber der Spaltweite w erweitert, indem z. B. der hinsichtlich der Bewegungsrichtung rückwärtige Polschenkel 7 in diesem Bereich auf einen größeren Abstand w' bezüglich des vorderen, gerade ausgebildeten Polschenkels 8 führt. Wegen des so ausgebildeten Zwischenraumes 13 zwischen den Schenkeln 7 und 8 ist es ermöglicht, daß in diesem Bereich 12 jeder Polschenkel von einer eigenen Spulenwicklung 14 bzw. 15 umgeben ist. Außerhalb dieses Bereiches auf der dem Aufzeichnungsmedium M abgewandten Seite sind die Polschenkel in bekannter Weise wieder zusammengeführt.

Bei der Herstellung des Magnetkopfes 2 in Dünnschicht-Technik wird im allgemeinen ein Substrat 16 verwendet, das z. B. aus TiC und Al$_2$O$_3$ besteht. Falls erforderlich, kann das Substrat 16 mit einer hinreichend dicken Isolationsschicht z. B. aus Al$_2$O$_3$ versehen werden. Zum Aufbau der Polschenkel 7 und 8 werden zunächst dünne Magnetschichten aus speziellen NiFe-Legierungen wie Permalloy (Ni/Fe-81/19) oder aus FeB durch Sputtern, Aufdampfen oder galvanische Abscheidung aufgebracht und jeweils durch eine nichtmagnetische Zwischenlage aus z. B. SiO$_2$ oder Al$_2$O$_3$ voneinander getrennt. Die Magnetisierung dieser Magnetschichten liegt dabei in der Schichtebene. Durch den Herstellungsprozeß bedingt weisen die Magnetschichten eine uniaxiale Anisotropie auf; d.h., daß jede Magnetschicht zwei um 90° gedrehte Anisotropieachsen aufweist, die als leichte oder schwere Richtung bezeichnet werden. Die Magnetisierung liegt bevorzugt parallel oder antiparallel zur leichten Richtung. Die leichte Richtung der Magnetschichten kann z. B. beim Aufbringen der jeweiligen Schicht durch ein angelegtes Magnetfeld induziert werden.

Die aufgewachsenen, unterschiedlichen Schichten werden durch an sich bekannte Techniken wie Fotolithographie, Plasma-, Ionenstrahl- oder naßchemisches Ätzen so strukturiert, daß damit die beiden Polschenkel 7 und 8 des Magnetkopfes 2 entstehen. Die leichte Richtung der Magnetisierung der Magnetschichten liegt hierbei im allgemeinen immer senkrecht zur Richtung des magnetischen Flusses in den Polschenkeln, d.h. im Bereich der Enden 9 und 10 im wesentlichen parallel zur Oberfläche des Aufzeichnungsmediums M. Nach Fertigstellung des einen Polschenkels 8 wird eine Isolationsschicht z. B. SiO$_2$ aufgebracht und werden anschließend die zum Ein- und/oder Auslesen der Daten in der Magnetspeicherschicht 3 des Aufzeichnungsmediums M erforderlichen Spulenwicklungen 14 und 15 hergestellt bzw. strukturiert. Diese Wicklungen bestehen z. B. aus Cu, Au und Al. Da unebene Magnetschichten eine Verschlechterung ihrer magnetischen Eigenschaften bewirken, können gegebenenfalls die Spulenwicklungen 14 und 15 in bekannter Weise mittels Polyimid-Lack eingeebnet werden. Daran anschließend erfolgt das Aufbringen und Strukturieren des zweiten Polschenkels 7. Schließlich wird zum Schutz des Dünnschicht-Magnetkopfes 2 noch eine verhältnismäßig dicke Protektionsschicht z. B. aus Al$_2$O$_3$ aufgebracht.

Mit dem in Figur 1 gezeigten Magnetkopf 2 soll gerade eine Schreibfunktion ausgeübt werden. Hierzu sind die beiden Spulenwicklungen 14 und 15 aufgrund der in der Figur an ihnen eingetragenen Stromführungsrichtungen so erregt, daß die magnetischen Flüsse in den ihnen zugeordneten Polschenkeln 7 bzw. 8 in bekannter Weise im wesentlichen parallel verlaufen. Der sich dabei an der dem Aufzeichnungsmedium M abgewandten Seite der Polschenkel ergebende Feldlinienverlauf ist durch gepfeilte Linien 17 angedeutet. An den beiden Enden 9 und 10 der Polschenkel 7 und 8 tritt also aufgrund der durch gepfeilte Linien 18 und 19 veranschaulichten magnetischen Flüsse bzw. Magnetisierungen jeweils ein Magnetfeld mit einer ausgeprägten senkrechten (vertikalen) Komponente aus, mit dem durch entsprechende Magnetisierung der Speicherschicht 3 des Aufzeichnungsmediums M eine entsprechende Information geschrieben wird. Dabei kann an den Enden 9 und 10 die Polstärke vorteilhaft etwa gleich sein, d.h. es herrscht dort der etwa gleiche Magnetfluß. Auch die magnetischen Flußdichten an den Polschenkelenden sollten zumindest weitgehend gleich groß sein, so daß die Polschenkelenden dann etwa gleiche Querschnittsflächen aufweisen. Die Magnetisierung in dem so beschriebenen Abschnitt 20 der Speicherschicht 3 ist mit einer gepfeilten Linie 21 veranschaulicht. In der Figur ist zwar die longitudinale Ausdehnung 1 dieses Speicherabschnittes 20 in der Größenordnung des entsprechenden Abstandes zwischen den äußeren Kanten der Polschenkelenden 9 und 10 gezeigt. Im allgemeinen ist jedoch diese Ausdehnung 1 kleiner, so daß mit dem erfindungsgemäßen Magnetkopf 2 praktisch eine höhere Informationsdichte in dem Aufzeichnungsmedium M erreicht wird als der geometrischen Ausdehnung der beiden Polschenkel entsprechen würde (vgl. z. B. auch "IEEE Trans. Magn.", vol. MAG-17, no. 6, Nov. 1981, Seiten 2538 bis 2540).

Bei dem in Figur 1 gezeigten Ausführungsbeispiel eines Magnetkopfes 2 wurde davon ausgegangen, daß für eine Schreibfunktion beide Polschenkel 7 und 8 des Magnetkopfes an ihren Enden 9 und 10 gleiche Fluß- bzw. Magnetisierungsrichtungen 18 und 19 aufweisen. Dies wird durch eine entsprechende Erregung der beiden Spulenwicklungen 14 und 15 erreicht. Gemäß der Erfindung ist jedoch vorgesehen, bei einer antiparallelen Magnetisierung der Polschenkelenden 9 und 10 Informationen in die Speicherschicht 3 des Aufzeichnungsmediums M einzuschreiben, falls besondere Feldstärkeverhältnisse an den Polschenkelenden eingehalten werden. Dies ist in Figur 2 angedeutet, wobei der dort gezeigte Magnetkopf 2 denselben Aufbau wie der in Figur 1 gezeigte Kopf hat. Mit Figur 1 übereinstimmende Teile sind deshalb mit den gleichen Bezugszeichen versehen. Im Gegensatz zu der Betriebsweise des Magnetkopfes 2 gemäß Figur 1 werden nach Figur 2 Informationen in einem Abschnitt 22 der Speicherschicht 3 des Aufzeichnungsmediums M durch senkrechte Magnetisierung vorteilhaft im wesentlichen nur mittels des Endes 9 des in Bewegungsrichtung gesehen rückwärtigen Polschenkels 7 geschrieben. D.h., eine Schreibfunktion des stirnseitigen Polschenkels 8 wird weitgehend unterdrückt. Dies läßt sich dadurch erreichen, daß man zu dem von der Spulenwicklung 14 auch in dem Polschenkel 8 hervorgerufenen, auf die Speicherschicht 3 hin gerichteten magnetischen Fluß mit Hilfe der Spulenwicklung 15 einen ausreichend großen magnetischen Gegenfluß erzeugt. Der hieraus resultierende Fluß bzw. die durch eine gepfeilte Linie 23 angedeutete Magnetisierung in dem Polschenkel 8 ist dann an dem Ende 10 entgegengesetzt zum Fluß bzw. zur Magnetisierung 24 der Spule 14 gerichtet und wesentlich kleiner. Die Ströme in den Spulenwicklungen 14 und 15 sind also so zu wählen, daß die an dem Ende 9 des Polschenkels 7 austretende senkrechte Magnetfeldkomponente $H_1$ vom Betrag her größer als die Koerzitivfeldstärke $H_c$ der Speicherschicht 3 und die senkrechte Magnetfeldkomponente $H_2$ am Ende 10 des Polschenkels 8 vom Betrag her wesentlich kleiner als die Koerzitivfeldstärke $H_c$ sind. Auf diese Weise können beim Schreiben der Teil des von der Spulenwicklung 14 erzeugten magnetischen Flusses, der durch an sich unerwünschte Streufelder verloren gehen würde, verhältnismäßig klein gehalten und somit die von dem Magnetkopf 2 erzeugte, schreibende, senkrechte Magnetfeldkomponente entsprechend erhöht werden.

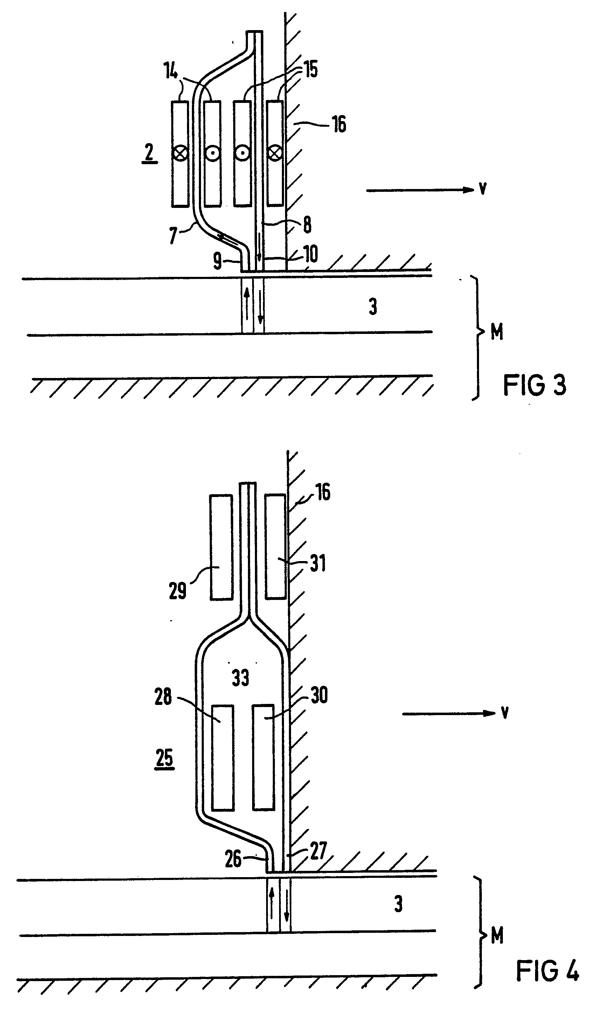

Figur 3 zeigt den Magnetkopf 2 nach Figur 1 oder 2 in entsprechender Darstellung beim Lesen, wobei mit diesen Figuren übereinstimmende Teile mit den gleichen Bezugszeichen versehen sind. Für die Lesefunktion werden die Spulenwicklungen 14 und 15 vorteilhaft in Serie geschaltet, so daß sich die in ihnen induzierten Spannungen addieren. Selbstverständlich kann aber auch die Detektion mit nur einer der Spulenwicklungen vorgenommen werden.

Eine zu wählende Ausführungsform eines Magnetkopfes für ein Datenspeichersystem nach der Erfindung geht aus Figur 4 in entsprechender Darstellung während seiner Lesefunktion hervor. Dieser mit 25 bezeichnete Magnetkopf unterscheidet sich von dem Magnetkopf 2 gemäß den Figuren 2 und 3 im wesentlichen nur dadurch, daß die seinen beiden Polschenkeln 26 und 27 zugeordneten Spulenwicklungen erfindungsgemäß jeweils zwei Teilwicklungen 28, 29 bzw. 30, 31 aufweisen. Dabei sind die Teilwicklungen 28 und 30 in einem zwischen den beiden Polschenkeln 26 und 27 ausgebildeten Zwischenraum 33 untergebracht. Auf der oberen, dem Aufzeichnungsmedium M abgewandten Seite, wo die beiden Polschenkel 26 und 27 wieder aneinandergefügt sind, sind die beiden Teilwicklungen 29 und 31 nur durch diese Polschenkel voneinander getrennt angeordnet. Diese Ausführungsform hat insbesondere den Vorteil, daß eine größere Anzahl von übereinander anzuordnenden Spulenwicklungen vermieden wird, d.h., daß die longitudinale Ausdehnung des Magnetkopfes entsprechend zu begrenzen ist. Er läßt sich zusammen mit der Spulenwicklung verhältnismäßig einfach in Dünnfilmtechnik erstellen.

## Patentansprüche

1. Datenspeichersystem
- mit einem Aufzeichnungsmedium (M), das mit mindestens einer magnetisierbaren Speicherschicht (3) versehen ist, welche ein magnetisch anisotropes Material enthält, dessen Achse leichter Magnetisierung im wesentlichen senkrecht zur Oberfläche des Mediums (M) ausgerichtet ist, und in das längs einer Spur Informationen durch senkrechte Magnetisierung der Speicherschicht (3) einzuschreiben sind,
- mit einem kombinierten Schreib- und Lese-Magnetkopf (2, 25), der einen den magnetischen Fluß führenden Leitkörper mit zwei Polschenkeln (7, 8) aufweist, die in Bewegungsrichtung des Kopfes hintereinander und mit vorbestimmtem Abstand (w, w') zueinander angeordnet sind und denen jeweils eine Spulenwicklung (14, 15) zugeordnet ist,
sowie
- mit einer Ansteuerschaltung für die beiden Spulenwicklungen (14, 15),
dadurch gekennzeichnet, daß - die Polschenkel (7, 8) dem Aufzeichnungsmedium (M) zugewandte Endstücke (9, 10, 26, 27) aufweisen, die zumindest weitgehend senkrecht zur Oberfläche des Aufzeichnungsmediums (M) ausgerichtet sind und parallel zu dieser Oberfläche verlaufende Polflächen von Magnetpolen ausbilden,

- zwischen den Polschenkeln (7, 8) ein vom Abstand (w) zwischen ihren dem Aufzeichnungsmedium (M) zugewandten Endstücken (9, 10, 26, 27) auf einen größeren Abstand (w') erweiterter Zwischenraum (13; 33) sowie ein Verbindungsbereich, in dem die Polschenkel (7, 8) auf ihrer dem Aufzeichnungsmedium (M) abgewandten Seite aneinander gefügt sind, ausgebildet sind,

- jede Spulenwicklung (14, 15) zwei Teilwicklungen (28, 29 bzw. 30, 31) umfaßt, wobei jeweils eine der Teilwicklungen (28, 30) in dem erweiterten Zwischenraum (13, 33) und die anderen Teilwicklungen (29, 31) in dem Verbindungsbereich angeordnet sind, und

- mittels der Ansteuerschaltung diese Spulenwicklungen (14, 15) derart zu erregen sind, daß die Führungsrichtungen des magnetischen Flusses in den dem Aufzeichnungsmedium (M) zugewandten Endstücken (9, 10, 26, 27) der Polschenkel (7, 8) für die Schreibfunktion antiparallel verlaufen, wobei die bezüglich der Oberfläche des Aufzeichnungsmediums (M) senkrechte Magnetfeldkomponente ($H_1$) des aus der Polfläche des einen Polschenkels (7) austretenden magnetischen Flusses (24) vom Betrag her größer ist als die Koerzitivfeldstärke ($H_c$) der Speicherschicht (3) des Aufzeichnungsmediums (M), während die entsprechende Magnetfeldkomponente ($H_2$) des magnetischen Flusses (23) des anderen Polschenkels (8) vom Betrag her kleiner als die Koerzitivfeldstärke ($H_c$) ist.

2. Datenspeichersystem nach Anspruch 1, dadurch gekennzeichnet, daß in dem Endstück (10, 27) des in Bewegungsrichtung (v) des Kopfes (2, 25), gesehen vorderen Polschenkels (8) der magnetische Fluß (23) kleiner und entgegengesetzt gerichtet ist zum magnetischen Fluß (24) in dem anderen Polschenkelendstück (9, 26).

3. Datenspeichersystem nach Anspruch 1 oder 2, dadurch gekennzeichnet, daß zumindest teilweise die den Magnetfluß führenden Teile (Polschenkel 7, 8; 26, 27) als Dünnschicht-Strukturen auf einem ebenen Substratkörper (16) aufgebracht sind.

4. Datenspeichersystem nach Anspruch 3, dadurch gekennzeichnet, daß die Spulenwicklungen (14, 15, 28 bis 31) als Dünnschicht-Strukturen zumindest teilweise auf dem Substratkörper (16) bzw. auf einem Polschenkel (8, 27) aufgebracht sind.

5. Datenspeichersystem nach einem der Ansprüche 1 bis 4, dadurch gekennzeichnet, daß zumindest teilweise die den Magnetfluß führenden Teile (Polschenkel 7, 8; 26, 27) aus weichmagnetischem Material bestehen.

6. Datenspeichersystem nach einem der Ansprüche 1 bis 5, dadurch gekennzeichnet, daß die den Magnetfluß führenden Teile (Polschenkel 7, 8; 26, 27) aus einem Material bestehen, dessen leichte Magnetisierung zumindest weitgehend senkrecht zur Führungsrichtung des Magnetflusses gerichtet ist.

7. Datenspeichersystem nach einem der Ansprüche 1 bis 6, dadurch gekennzeichnet, daß der Abstand (w) zwischen den dem Aufzeichnungsmedium (M) zugewandten Endstücken (9, 10) der Polschenkel (7, 8; 26, 27) unter 1 µm liegt.


**Claims**

1. Data storage system
- with a recording medium (M), which is provided with a magnetizable storage layer (3) containing a magnetically anisotropic material, whose axis of easy magnetization is aligned substantially perpendicularly to the surface of the medium (M), and into which pieces of information are to be entered along one track by means of perpendicular magnetization of the storage layer (3),
- with a combined writing and reading magnetic head (2, 25) which has a conductive body which conducts the magnetic flux and has two pole shanks (7, 8) arranged behind each other in the moving direction of the head and adjacent to each other with a pre-determined gap (w, w') and with which respective coil windings (14, 15) are associated, and
- with a control circuit for the two coil windings (14, 15), characterised in that
- the pole shanks (7, 8) have end pieces (9, 10, 26, 27) facing the recording medium (M), which are aligned at least largely perpendicularly to the surface of the recording medium (M) and form pole faces of magnetic poles, which run parallel to this surface,
- a space (13; 33), which expands from the gap (w) between their pole end pieces (9, 10, 26, 27) facing the recording medium to a greater gap (w'), and also a connecting region, in which the pole shanks (7, 8) are joined to each other on their sides turned away from the recording medium (M), are formed between the pole shanks (7, 8),
- each coil winding (14, 15) comprises two part-windings (28, 29 or 30, 31), wherein one of the part-windings (28, 30) in each case is arranged in the expanded space (13, 33) and the other part-windings (29, 31) are arranged in the connecting region, and
- these coil windings (14, 15) are to be excited by means of the control circuit in such a way that the conductive directions of the magnetic flux in the end pieces (9, 10, 26, 27) of the pole shanks (7, 8), facing the recording medium (M), run antiparallel for the writing function, wherein the magnetic field component (H$_1$), which is perpendicular relative to the surface of the recording medium (M), of the magnetic flux (24) emerging from the pole face of the one pole shank (7) is greater in its absolute value than the coercive field strength (H$_c$) of the storage layer (3) of the recording medium (M), while the corresponding magnetic field component (H$_2$) of the magnetic (23) of the other pole shank (8) is smaller in its absolute value than the coercive field strength (H$_c$).

2. Data storage system according to claim 1, characterised in that the magnetic flux (23) in the end piece (10, 27) of the pole shank (8) which is in front when seen in the moving direction (v) of the head (2, 25) is smaller than and in the opposite direction to the magnetic flux (24) in the other pole shank end piece (9, 26).

3. Data storage system according to claim 1 or 2, characterised in that the parts (pole shanks 7, 8; 26, 27) which conduct the magnetic flux are applied at least partially as thin-layer structures to a planar substrate body (16).

4. Data storage system according to claim 3, characterised in that the coil windings (14, 15, 28 to 31) are applied at least partially as thin-layer structures to the substrate body (16) or to one pole shank (8, 27).

5. Data storage system according to one of claims 1 to 4,
characterised in that the parts (pole shanks 7, 8; 26, 27) which conduct the magnetic flux comprise at least partially a soft magnetic material.

6. Data storage system according to one of claims 1 to 5,
characterised in that the parts (pole shanks 7, 8; 26, 27) which conduct the magnetic flux comprise a material whose easy magnetization is directed at least largely perpendicularly to the conductive direction of the magnetic flux.

7. Data storage system according to one of claims 1 to 6,
characterised in that the gap (w) between the end pieces (9, 10) of the pole shanks (7, 8; 26, 27), facing the recording medium (M), is less than 1 μm.


**Revendications**

1. Système formant mémoire de données
- comportant un support d'enregistrement (M), qui comporte au moins une couche de mémoire (3) pouvant être aimantée, contenant un matériau anisotrope du point de vue magnétique, dont l'axe d'aimantation facile est sensiblement perpendiculaire à la surface du support (M) et dans lequel des informations peuvent être enregistrées le long d'une piste au moyen d'une aimantation perpendiculaire de la couche de mémoire (3),
- une tête magnétique combinée d'enregistrement et de lecture (2, 25), qui possède un corps conducteur guidant le flux magnétique et comportant deux branches polaires (7, 8) qui sont disposées l'une derrière l'autre dans la direction de déplacement de la tête en étant séparées par une distance prédéterminée (w, w') et auxquelles sont associés des enroulements respectifs de bobines (14, 15), et
- un circuit de commande pour les deux enroulements de bobines (14, 15),
caractérisé par le fait que
- les branches polaires (7, 8) comportent des pièces d'extrémité (9, 10, 26, 27) qui sont tournées vers le support d'enregistrement (M), sont orientées au moins dans une large mesure perpendiculairement à la surface du support d'enregistrement (M) et forment des surfaces polaires, qui s'étendent parallèlement à cette surface, de pôles magnétiques,
- entre les branches polaires (7, 8) se trouvent formés un espace intercalaire (13; 33) qui s'élargit par le fait que la distance (w) entre ces éléments d'extrémité (9, 10, 26, 28) tournés vers le support d'enregistrement (M), augmente jusqu'à une valeur supérieure (w'), ainsi qu'une zone de jonction, dans laquelle les branches polaires (7, 8) sont réunies l'une contre l'autre sur leur côté tourné à l'opposé du support d'enregistrement (M),
- chaque enroulement de bobine (14, 15) comporte deux enroulements partiels (28, 29 et 30, 31), l'un respectif des enroulements partiels (28, 30) étant situé dans l'espace intercalaire élargi (13; 33) tandis que les autres enroulements partiels (22, 31) sont situés dans la zone de jonction, et
- ces enroulements de bobines (14, 15) doivent être excités au moyen du circuit de commande de telle manière que les directions de passage du flux magnétique dans les éléments d'extrémité (9, 10, 26, 27), tournés vers le support d'enregistrement (M), des branches polaires (7, 8) sont antiparallèles pour la fonction d'enregistrement, auquel cas la composante du champ magnétique (H$_1$), perpendiculaire à la surface du support d'enregistrement (M), du flux magnétique (24) sortant de la surface polaire d'une branche polaire (7) possède une valeur absolue supérieure à l'intensité du champ coercitif (H$_c$) de la couche de mémoire (3) du support d'enregistrement (M), tandis que la composante correspondante de champ magnétique (H$_2$) du flux magnétique (23) de l'autre branche polaire (8) possède une valeur absolue inférieure à l'intensité du champ coercitif (H$_c$).

2. Système formant mémoire de données suivant la revendication 1, caractérisé par le fait que dans la pièce d'extrémité (10, 27) de la branche polaire (8) prévue dans la direction de déplacement (v) de la tête (2, 25), le flux magnétique (23) est inférieur et de sens opposé au flux magnétique (23) présent dans l'autre élément d'extrémité (29, 28) de la branche polaire.

3. Système formant mémoire de données suivant la revendication 1 ou 2, caractérisé par le fait que les parties (branches polaires 7, 8; 26, 27), qui guident le flux magnétique, sont disposées au moins partiellement sous la forme de structures à couches minces sur un corps formant substrat plat (16).

4. Système formant mémoire de données suivant la revendication 3, caractérisé par le fait que les enroulements de bobines (14, 15, 28 à 31) réalisés sous la forme de structures à couches minces sont disposés au moins partiellement sur le corps formant substrat (16) ou sur une branche polaire (8, 27).

5. Système formant mémoire de données suivant l'une des revendications 1 à 4, caractérisé par le fait que les parties (branches polaires 7, 8; 26, 27) guidant le flux magnétique sont réalisées au moins partiellement en un matériau magnetique doux.

6. Système formant mémoire de données suivant l'une des revendications 1 à 5, caractérisé par le fait que les parties (branches polaires 7, 8; 26, 27) guidant le flux magnétique sont réalisées en un matériau dont l'aimantation facile est orientée au moins dans une large mesure perpendiculairement à la direction de guidage du flux magnétique.

7. Système formant mémoire de données suivant l'une des revendications 1 à 6, caractérisé par le fait que la distance (w) entre les éléments d'extrémité (9, 10), tournés vers le support d'enregistrement (M), des branches polaires (7, 8; 26, 27) est inférieure à 1 μm.

0 135 739

FIG 1

FIG 2

FIG 3

FIG 4

3